# FASCICULE DE BREVET EUROPEEN

(11) **EP 2 691 299 B1**
(45) Date de publication et mention de la délivrance du brevet: **06.07.2016**
(21) Numéro de dépôt: 12712624.1
(22) Date de dépôt: 27.03.2012
(51) Int. Cl.: B64C 39/02

(54) **MICRO/NANO VÉHICULE AÉRIEN COMMANDE À DISTANCE COMPORTANT UN SYSTÈME DE ROULAGE AU SOL, DE DÉCOLLAGE VERTICAL ET D'ATTERRISSAGE**
FERNGESTEUERTES MIKRO/NANOFLUGZEUG AUSGESTATTET MIT EINEM SYSTEM TUR ROLLEN AM BODEN UND SENKRECHTSTARTEN UND LANDEN
REMOTELY PILOTED MICRO/NANO AICRAFT PROVIDED WITH A SYSTEM FOR GOUND TAXIING AND VERTICAL TAKE OFF AND LANDING

(30) Priorité: 29.03.2011 FR 1152585
(43) Date de publication de la demande: 05.02.2014
(73) Titulaire: Institut Supérieur De L'Aéronautique Et De L'Espace, 31055 Toulouse Cedex 4 (FR)
(72) Inventeur: MOSCHETTA, Jean-Marc, F-31400 Toulouse (FR); THIPYOPAS, Chinnapat, Bangkok 10900 (TH)
(74) Mandataire: Ipside
(86) Numéro de dépôt international: PCT/EP2012/055435
(87) Numéro de publication internationale: WO 2012/130856

(56) Documents cités:
- EP-A1- 1 586 360
- US-A- 3 107 888
- US-A- 3 997 136
- US-B1- 6 550 715

## Description

La présente invention concerne un micro/nano véhicule aérien, commandé à distance, comportant un système de roulage au sol, de décollage vertical et d'atterrissage

### Contexte de l'invention et problèmes posés

Des micro- ou nano véhicules aériens, comme lequel montré dans le document US 3 997 136, sont de plus en plus couramment utilisés pour des missions télé-opérées, de surveillance ou de reconnaissance, par exemple à l'intérieur de bâtiments. De tels dispositifs sont des appareils de quelques dizaines à quelques centaines de grammes, souvent dotés d'hélices entraînées par des moteurs électriques.

Les besoins spécifiques des missions à l'extérieur et dans les bâtiments sont relativement éloignés, avec des demandes de vol stationnaire ou précis à l'intérieur de bâtiments, et des besoins de vol rapide apte à contrer les effets de vent à l'extérieur. De la sorte, les micro-drones destinés à un vol extérieur sont souvent du type à voilure fixe, alors que les micro-drones à usage de reconnaissance d'espace fermé sont souvent de type à voilure tournante. On connaît notamment, dans ce domaine, des véhicules à quatre hélices horizontales carénées, reliées à un corps central par des tiges rigides.

Des besoins multi-missions apparaissent aujourd'hui, sans qu'une de ces configurations classiques se révèle globalement satisfaisante.

### Exposé de l'invention

Dans le but de proposer un micro-drone multi-mission, l'invention vise sous un premier aspect un micro-véhicule aérien comportant un micro-drone de type télé-opéré, à voilure fixe, présentant un plan de symétrie longitudinal vertical XZ, ledit micro-drone comportant des moyens de propulsion.

Le micro-véhicule comporte des roues, attachés aux extrémités latérales d'une aile de la voilure fixe du micro-drone, l'axe de rotation Y1 des roues étant parallèle à l'axe transversal Y du micro-drone, cet axe de rotation Y1 des roues étant situé en partie avant de l'aile,

les roues présentant un diamètre D, tel que les moyens de propulsion et la voilure fixe ne débordent pas du cylindre déterminé par les deux roues.

De cette manière, les roues jouent le rôle de structure de protection du mini-drone, en plus de leur fonction de roulage au sol.

Selon divers modes de réalisation, éventuellement utilisés en conjonction :
- L'axe de rotation des roues Y1 est disposé, selon l'axe longitudinal X, en avant du centre de gravité du micro-drone, de manière à ce que, lorsque les moyens de propulsion ne fournissent pas de poussée, le micro-drone tende à se placer, sous l'effet de son propre poids, selon un plan vertical, c'est-à-dire en position de décollage vertical.
- Le centre de gravité du micro-drone est situé, selon l'axe longitudinal X, en avant du centre aérodynamique du micro-drone, ce qui lui confère la stabilité statique en vol horizontal.
- L'axe de rotation des roues Y1 est situé dans l'alignement de l'axe de poussée des moyens de propulsion, pour éviter la création d'un moment de rotation sur le véhicule lorsque ces moyens de propulsion sont en fonctionnement. On comprend par "situé dans l'alignement" que les deux axes sont concourants.
- Les roues latérales sont démontables de l'aile par simple traction sur leur moyeu. Ceci permet une adaptation facile du micro-véhicule à diverse missions comportant ou non une phase de roulage ou d'attente au sol.
- L'axe de rotation Y1 des roues est situé en partie avant de l'aile, à une distance du bord d'attaque comprise entre 5 et 20% de la largeur de l'aile.

Selon un mode de réalisation avantageux, chaque roue latérale est reliée à son moyeu par un ensemble de rayons, ces rayons ayant une forme incurvée vers l'intérieur, chaque roue latérale étant située dans un plan longitudinal XZ proche de l'axe longitudinal d'une moyen de propulsion, la courbure des rayons étant adaptée au profil de l'aile, de telle sorte que ce profil ne déborde pas de cette courbure des rayons.

Selon un autre mode de réalisation, chaque roue latérale est reliée à son moyeu par un ensemble de rayons, les roues latérales étant sensiblement planes, leurs rayons étant coplanaires. Cette disposition augmente la stabilité du micro-véhicule lors de ses évolutions au sol.

Selon un mode de réalisation préféré, l'aile comporte deux élevons, situés de part et d'autre du plan longitudinal XZ du micro-drone, attachés à la partie arrière de l'aile, et articulés autour d'un même axe transversal.

Le micro-véhicule comporte alors préférentiellement des moyens de commander les élevons indépendamment l'un de l'autre de manière à faciliter le pilotage.

Plus particulièrement, chacun de ces élevons est solidarisé à une dérive perpendiculaire au plan de l'aile, de directions opposées, de sorte que des mouvements des élevons se traduisent par des déflexions des dérives.

Dans ce cas, selon un mode de réalisation favorable, les dérives verticales du micro-drone sont dimensionnées de telle sorte que, lorsqu'elles sont en position de repos, non défléchies, l'extrémité de chacune de ces dérives verticales déborde légèrement et de façon opposée, du cylindre déterminé par les roues.

Plus particulièrement, dans ce cas, ces extrémités sont situées dans un plan tangent au cylindre déterminé par les roues.

Dans un mode de réalisation préféré, les moyens de propulsion comprennent deux hélices contrarotatives disposées à la partie avant de l'aile, selon l'axe longitudinal X, de part et d'autre du plan de symétrie longitudinal vertical XZ du micro-véhicule.

Le micro-véhicule comporte préférentiellement des moyens de commander le fonctionnement des hélices propulsives indépendamment l'une de l'autre, de manière à faciliter son pilotage, tant en vol qu'au sol.

L'invention vise sous un second aspect un procédé de pilotage sur le sol d'un micro-véhicule tel qu'exposé, ledit procédé comprenant
- une commande d'une déflexion des élevons de manière à incliner le fuselage,
- le démarrage des moyens de propulsion.

L'invention vise également un procédé de pilotage d'un micro-véhicule tel qu'exposé, le long d'une surface inclinée, quelconque, notamment un mur ou un plafond, comprenant une étape de commande de maintien d'une composante de la poussée des moyens de propulsion, dirigée vers cette surface.

L'invention vise enfin un kit de transformation d'un micro-drone de type télé-opéré, à voilure fixe, présentant un plan de symétrie longitudinal vertical XZ, ledit micro-drone comportant des moyens de propulsion.

Le kit comporte :
- des roues dites latérales,
- des moyens d'attacher lesdites roues latérales aux extrémités latérales d'une aile de la voilure fixe du micro-drone, l'axe de rotation Y1 des roues latérales étant parallèle à l'axe transversal Y du micro-drone,

les roues latérales présentant un diamètre D, adapté à ce que les moyens de propulsion et la voilure fixe du micro-drone ne débordent pas du cylindre déterminé par les roues latérales lorsque celles-ci sont installées sur le micro-drone.

### Brève description des figures

La description qui va suivre, donnée uniquement à titre d'exemple d'un mode de réalisation de l'invention, est faite en se référant aux figures annexées qui représentent :
- figure 1 : une vue en perspective d'un micro-véhicule aérien doté d'un dispositif de roulage;
- figure. 2 : une vue similaire à la figure. 1, avec une seule roue de bout d'aile en position d'assemblage,
- figure. 3 : une vue en perspective analogue la figure. 1 avec les empennages horizontaux déviés en sens inverse, mettant en évidence le lien de chacun d'entre eux avec un stabilisateur vertical,
- figure. 4 : une vue de côté du micro-véhicule aérien de la figure 1, disposé verticalement debout sur le sol et prêt au décollage;
- figure. 5 : une vue analogue à la figure 4, avec un micro-véhicule aérien qui commence à rouler au sol. Les empennages horizontaux sont déviés symétriquement;
- figure. 6 : une vue analogue aux figures 4et 5, au cours de mouvement au sol vers la gauche de la figure;
- figure. 7 : une vue de dessus du micro-véhicule aérien représenté sur la figure. 1;
- figure 8 : une vue arrière du micro-véhicule aérien de la figure. 1;
- figure. 9 : une vue en perspective d'une variante de micro-véhicule aérien avec un autre forme de structure de roulement;
- figure. 10 : une vue en perspective d'une autre variante doté d'une aile de plan différent
- figure. 11 : une vue en perspective d'un autre mode de réalisation de cette invention;
- figure. 12 : une vue en perspective de la réalisation de la figure. 11 sans structure de roulage.

### Description détaillée d'au moins un mode de réalisation préféré de l'invention

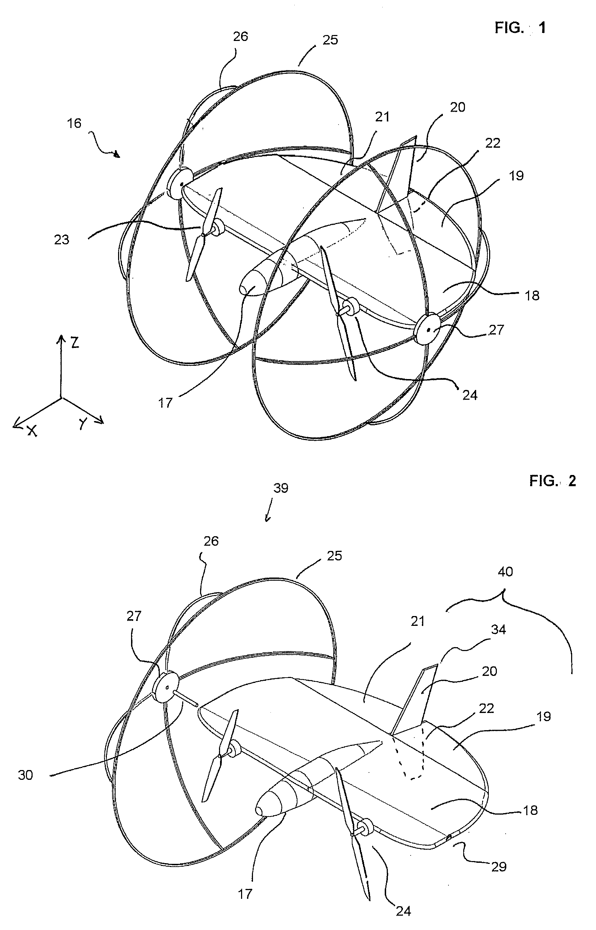

Ainsi qu'on le voit sur les figures 1 et 2, un drone roulant 16 selon l'invention comporte principalement un micro-drone 40, auquel est adjoint un dispositif de roulement et de protection 39.

On nomme ici micro-drone un véhicule volant commandé à distance ou autonome, généralement d'une envergure de quelques dizaines de centimètres. La description qui suit s'applique également au cas de nano-drones, dont l'envergure est généralement inférieure à dix centimètres.

On définit pour la suite de la description :
- un axe longitudinal X, situé dans un plan horizontal, et orienté dans le sens de déplacement du micro-drone 40;
- un axe transversal Y, situé dans le plan horizontal et perpendiculaire à l'axe longitudinal X,
- un axe vertical Z qui complète ce référentiel.

Les termes de "avant", "arrière", "dessus", "dessous", "gauche", "droite" etc. seront définis par référence à ces axes dans la suite de la description.

Le micro-drone 40 comporte en premier lieu un fuselage 17, adapté à accueillir par exemple une caméra, ou autre équipement spécifique à la mission envisagée. Le micro-drone 40 comporte en outre une aile 18, dont la partie avant est solidarisée au fuselage 17. A titre d'exemple sans valeur limitative, l'envergure de l'aile 18 est ici d'environ trente centimètres, pour une largeur d'une quinzaine de centimètres. Le fuselage et l'aile sont réalisés dans un matériau léger, d'une façon connue de l'homme de l'art des micro-drones.

La partie avant de l'aile 18 supporte deux hélices propulsives 23, 24, entraînées par des moteurs par exemple de type électrique, ces hélices propulsives 23, 24 étant disposées à l'avant de l'aile 18, de part et d'autre du fuselage 17. Ces hélices 23, 24 sont ici contrarotatives.

Les moteurs des hélices propulsives 23, 24 sont contrôlés indépendamment, ce qui permet en vol horizontal d'assurer la stabilité de route du véhicule, et, au sol, de le diriger en jouant sur la poussée exercée par chaque hélice, grâce à la disposition des hélices de part et d'autre du plan de symétrie longitudinal du micro-drone. Cette disposition de part et d'autre du plan de symétrie longitudinal permet également une simplicité de montage, par opposition à des dispositions comportant deux hélices alignées selon un même axe, qui impliquent notamment l'utilisation d'arbre creux et d'un mécanisme d'entraînement complexe et fragile.

Les moteurs des hélices propulsives 23, 24 sont alimentés par des batteries, et sont contrôlés par une électronique qui sortent en tant que tels du cadre de la présente invention, et ne sont donc pas détaillés plus avant ici.

L'aile 18 comporte deux élevons 19, 21, situés de part et d'autre de l'axe longitudinal X du micro-drone 40, attachés à la partie arrière de l'aile, et articulés autour d'un même axe transversal. Ces élevons 19, 21 sont pilotés indépendamment. Le pilotage des mouvements de ces élevons 19, 21 permet, de façon connue en soi, le pilotage du micro-drone 40 en roulis et tangage. La logique de pilotage du micro-drone sort du cadre de la présente invention.

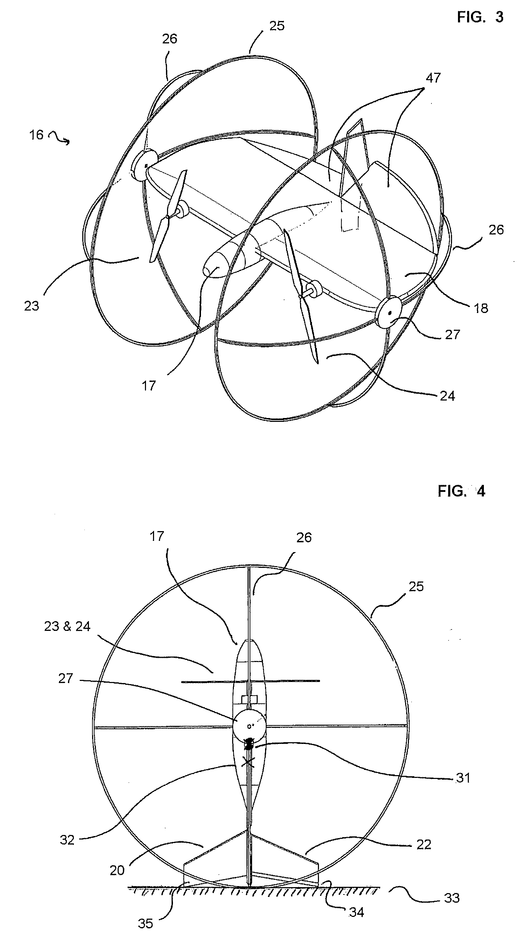

Chacun de ces élevons 19, 21 est solidarisé à une dérive, perpendiculaire au plan de l'aile 18 dans le présent exemple (et plus généralement non parallèle) : l'élevon gauche 19 étant solidarisé à une dérive dite supérieure 20 située au dessus du plan de l'aile 18, et l'élevon droit 21 à une dérive dite inférieure 22 située au dessous du plan de l'aile 18. De cette manière, des mouvements différents des élevons 19, 21 se traduisent par des déflexions des dérives 20, 22, ainsi qu'illustré figure 3.

Le dispositif de roulement et de protection 39 du drone roulant 16 comporte deux roues latérales 25. Chacune de ces roues latérales 25 est fixée à une extrémité latérale de l'aile 18 par l'intermédiaire d'un moyeu 27 et d'une tige axiale 30 qui vient s'insérer dans un logement 29 ménagé dans l'épaisseur de l'aile 18. Chaque roue latérale 25 peut tourner librement dans son logement 29, par exemple par utilisation de roulements à billes disposés au sein dudit logement 29. Dans le mode de réalisation considéré ici, les roues latérales 25 sont démontables par simple traction sur le moyeu 27.

L'axe de rotation Y1 des roues 25 est donc parallèle à l'axe transversal Y. Cet axe de rotation Y1 des roues 25 est situé en partie avant de l'aile 18, dans le présent exemple à une distance du bord d'attaque voisine d'environ 10% de la largeur de l'aile 18.

Plus généralement, l'axe de rotation Y1 des roues 25 est disposé en avant du centre de gravité 31 du micro-drone 40, de manière à ce que, lorsque les hélices propulsives 23, 24 ne produisent pas de poussée, le micro-drone 40 tende à se placer, sous l'effet de son propre poids, selon un plan vertical YZ, c'est-à-dire en position de décollage vertical.

De même, le centre de gravité 31 du micro-drone 40 est situé en avant du centre aérodynamique 32 du micro-drone, ce qui lui confère la stabilité statique en vol horizontal.

Enfin, l'axe de rotation Y1 des roues 18 est situé dans l'alignement de l'axe de poussée des hélices propulsives 23, 24, pour éviter la création d'un moment de rotation sur le véhicule lorsque ces hélices sont en fonctionnement.

Le diamètre D des roues 25 est ici d'environ une trentaine de centimètres. Comme on le voit sur la figure 4, ce diamètre D est choisi de telle sorte que le rayon D/2 est supérieur à la distance entre l'axe de rotation Y1 des roues et le bord de fuite des élevons 19, 21. De la même manière, ce diamètre D est préférentiellement tel que les hélices propulsives 23, 24 ne débordent pas du cylindre déterminé par les deux roues 25.

De cette manière, les roues 25 fournissent une protection aux hélices propulsives 23, 24 ainsi qu'à l'aile 18, en cas de choc du micro-drone 40 contre un obstacle.

Chaque roue 25 est reliée au moyeu 27 correspondant par un ensemble de rayons 26, au nombre de quatre, dans le présent exemple de réalisation, nullement limitatif.

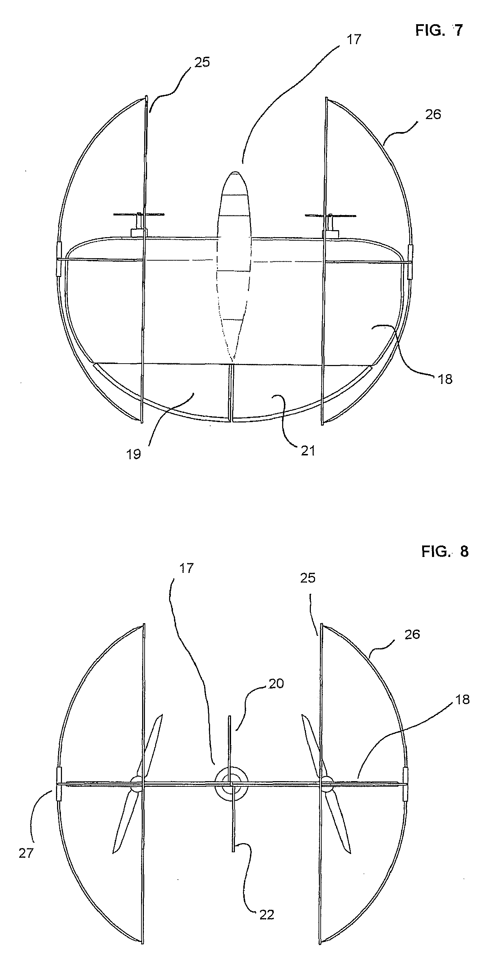

Comme on le voit sur les figures 7 et 8, ces rayons 26 ont, dans le présent exemple, une forme incurvée vers l'intérieur, chaque roue 25 étant située dans un plan longitudinal XZ proche de l'axe d'une hélice propulsive 23, 24.

La courbure des rayons 26 est adaptée au profil de l'aile 18, de telle sorte que celui-ci ne déborde pas de cette courbure (voir figure 7).

Dans un but de minimisation du poids du micro-drone, les roues 25 et les rayons 26 sont ici réalisées en fibre de carbone ou tout autre matériau léger.

Dans le présent exemple de réalisation, les dérives verticales 20, 22 du micro-drone 40 sont dimensionnées de telle sorte que, lorsqu'elles sont en position de repos, non défléchies, l'extrémité 34, 35 de chacune déborde légèrement et de façon opposée, ici de quelques centimètres, du cylindre déterminé par les roues 25. Par ailleurs, ces extrémités 34, 35 sont situées dans un plan tangent au cylindre déterminé par les roues 25 (voit figure 4).

De cette manière, en position de repos, le drone roulant 16 étant situé sur un plan horizontal, une position d'équilibre stable est constituée lorsque le fuselage est disposé selon l'axe vertical Z, les dérives verticales 20, 22 prenant appui sur le plan horizontal par leurs extrémités 34, 35.

### Mode de fonctionnement

A partir d'une position de repos sur une surface 33 sensiblement horizontale, telle qu'illustrée sur la figure 4, le drone roulant 16 peut naturellement décoller à la verticale en mettant en oeuvre ses hélices propulsives 23, 24.

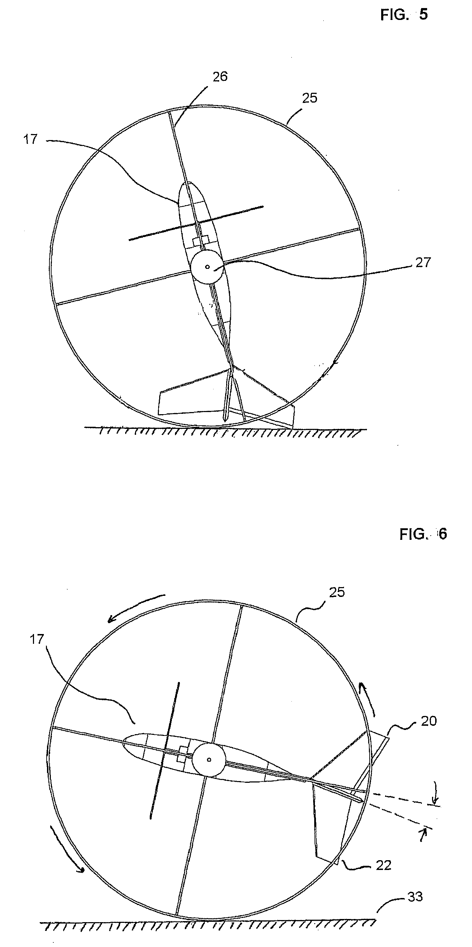

Il est également possible de commander une déflexion des élevons 19, 21, de manière à incliner le fuselage 17 (figure 5). Puis, le démarrage des hélices propulsives 23, 24, combiné à cette déflexion des élevons, permet une inclinaison complémentaire du micro-drone 40 (figure 6) et son roulement sous l'effet de la poussée des hélices.

De la même manière, il est possible de commander un déplacement le long d'un plan ou d'une surface quelconque, notamment un mur ou un plafond, en maintenant une composante de la poussée des hélices 23, 24 dirigée vers cette surface.

Ce concept peut être appliqué à un grand nombre de micro-drones à décollage vertical, en ajoutant le système de roulement au sol à l'extrémité d'une aile pourvu qu'elle soit suffisamment raide. L'invention vise donc également un kit de transformation d'un tel micro-drone en véhicule à capacité de roulage.

### Avantages de l'invention

On comprend que le dispositif apporte des avantages significatifs par rapport à l'art antérieur.

Cette invention concerne un micro-véhicule aérien multi-mission. Elle comprend des éléments permettant à un micro-véhicule aérien de se déplacer ou de rouler le long d'une surface, notamment au sol, et d'être capable de redécoller une fois du sol.

La partie "structure de roulage" de l'invention permet de protéger le véhicule lors de vol près d'un obstacle tel qu'un mur, et quand il tombe au sol.

La disposition des hélices de part et d'autre du plan de symétrie longitudinal du micro-drone permet de le diriger aisément au sol et en vol.

La capacité de translation en l'air n'est pas nécessaire dans certaines situations telles que missions à l'intérieur d'un bâtiment.

Dans ce cas, une translation sur le terrain, qui utilise moins d'énergie, est suffisante pour achever la mission. La capacité de déplacement au sol permet d'économiser de l'énergie et accroit donc la durée de mission du véhicule.

En outre, la configuration décrite permet un redécollage, après une chute dans n'importe quelle position sur le terrain.

Le micro-drone décrit présente une capacité de vol convertible entre vol horizontal et vol vertical. Ceci est dû d'une part, à la contra-rotation des hélices. D'autre part, l'utilisation d'hélices tractrices permet de compenser la perte d'efficacité des gouvernes en vol vertical quasi stationnaire (du fait de l'absence de vitesse du véhicule relativement à l'air environnant) par le souffle généré par ces hélices sur ces gouvernes.

### Variantes de l'invention

La portée de la présente invention ne se limite pas aux détails des formes de réalisation ci-dessus considérées à titre d'exemple, mais s'étend au contraire aux modifications à la portée de l'homme de l'art.

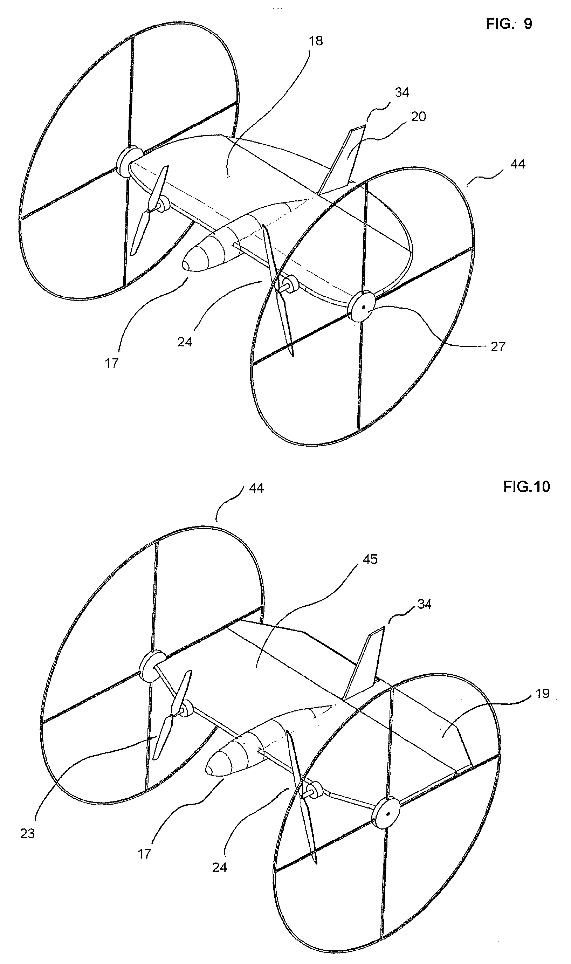

Dans une première variante de mise en oeuvre, illustrée par la figure 9, les roues 25 sont remplacées par des roues planes 44, dont les rayons sont coplanaires. Cette disposition augmente la stabilité latérale du drone roulant 16 lorsque celui-ci est au sol.

Dans une seconde variante (figure 10), l'aile du micro-drone est conformée en octogone allongé 45.

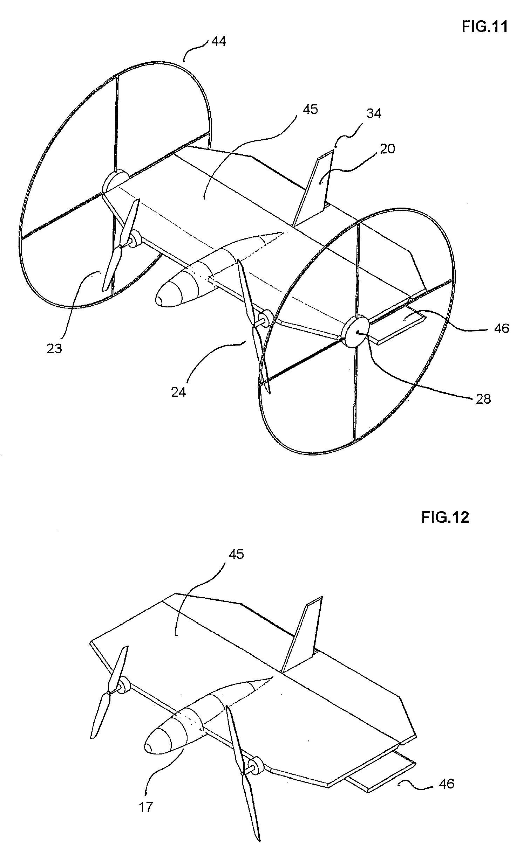

Dans encore une autre variante (voir figures 11 et 12), le micro-drone 40 est du type biplan, avec une seconde aile 46 disposée en dessous et en arrière de l'aile principale 45.

## Revendications

1. Micro-véhicule aérien comportant un micro-drone (40) de type télé-opéré, à voilure fixe, présentant un plan de symétrie longitudinal vertical XZ, ledit micro-drone (40) comportant des moyens de propulsion (23, 24)
**caractérisé en ce qu'**il comporte des roues latérales (25), attachés aux extrémités latérales d'une aile (18) de la voilure fixe du micro-drone (40), l'axe de rotation Y1 des roues latérales (25) étant parallèle à l'axe transversal Y du micro-drone (40),
les roues latérales (25) présentant un diamètre D, tel que les moyens de propulsion (23, 24) et la voilure fixe ne débordent pas du cylindre déterminé par les deux roues latérales (25).

2. Micro-véhicule selon la revendication 1, **caractérisé en ce que** l'axe de rotation Y1 des roues latérales (25) est disposé, selon l'axe longitudinal X, en avant du centre de gravité du micro-drone (40).

3. Micro-véhicule selon l'une quelconque des revendications 1 à 2, **caractérisé en ce que** le centre de gravité du micro-drone (40) est situé, selon l'axe longitudinal X, en avant du centre aérodynamique (32) du micro-drone (40).

4. Micro-véhicule selon l'une quelconque des revendications 1 à 3, **caractérisé en ce que** l'axe de rotation Y1 des roues latérales (25) est situé dans l'alignement de l'axe de poussée des moyens de propulsion (23, 24), c'est-à-dire que les deux axes sont concourants.

5. Micro-véhicule selon l'une quelconque des revendications 1 à 4, **caractérisé en ce que** les roues latérales (25) sont démontables de l'aile par simple traction sur leur moyeu (27).

6. Micro-véhicule selon l'une quelconque des revendications 1 à 5, **caractérisé en ce que** l'axe de rotation Y1 des roues (25) est situé en partie avant de l'aile (18), à une distance du bord d'attaque voisine comprise entre 5 et 20% de la largeur de l'aile (18).

7. Micro-véhicule selon l'une quelconque des revendications 1 à 6, **caractérisé en ce que** chaque roue latérale (25) est reliée à son moyeu (27) par un ensemble de rayons (26), ces rayons (26) ayant une forme incurvée vers l'intérieur, chaque roue latérale (25) étant située dans un plan longitudinal XZ proche de l'axe longitudinal d'une moyen de propulsion (23, 24), la courbure des rayons (26) étant adaptée au profil de l'aile (18), de telle sorte que ce profil ne déborde pas de cette courbure des rayons (26).

8. Micro-véhicule selon l'une quelconque des revendications 1 à 6, **caractérisé en ce que** chaque roue latérale (25) est reliée à son moyeu (27) par un ensemble de rayons (26), les roues latérales (25) étant sensiblement planes, leurs rayons (26) étant coplanaires.

9. Micro-véhicule selon l'une quelconque des revendications 1 à 8, **caractérisé en ce que** l'aile (18) comporte deux élevons (19, 21), situés de part et d'autre du plan longitudinal XZ du micro-drone (40), attachés à la partie arrière de l'aile (18), et articulés autour d'un même axe transversal.

10. Micro-véhicule selon la revendication 9, **caractérisé en ce qu'**il comporte des moyens de commander les élevons (19, 21) indépendamment l'un de l'autre.

11. Micro-véhicule selon la revendication 10, **caractérisé en ce que** chacun de ces élevons (19, 21) est solidarisé à une dérive perpendiculaire au plan de l'aile (18), de directions opposées, de sorte que des mouvements des élevons (19, 21) se traduisent par des déflexions des dérives (20, 22).

12. Micro-véhicule selon la revendication 11, **caractérisé en ce que** les dérives verticales (20, 22) du micro-drone (40) sont dimensionnées de telle sorte que, lorsqu'elles sont en position de repos, non défléchies, l'extrémité (34, 35) de chacune de ces dérives verticales (20, 22) déborde légèrement et de façon opposée, du cylindre déterminé par les roues (25).

13. Micro-véhicule selon la revendication 12, **caractérisé en ce que** ces extrémités (34, 35) sont situées dans un plan tangent au cylindre déterminé par les roues (25)

14. Micro-véhicule selon l'une quelconque des revendications 1 à 13, **caractérisé en ce que** les moyens de propulsion comprennent deux hélices contrarotatives (23, 24) disposées à la partie avant de l'aile (18), selon l'axe longitudinal X, de part et d'autre du plan de symétrie longitudinal vertical XZ du micro-véhicule.

15. Micro-véhicule selon la revendication 14, **caractérisé en ce qu'**il comporte des moyens de commander le fonctionnement des hélices propulsives (23, 24) indépendamment l'une de l'autre

16. Procédé de pilotage sur le sol d'un micro-véhicule selon l'une quelconque des revendications 12 à 15, ledit procédé comprenant
- une commande d'une déflexion des élevons (19, 21), de manière à incliner le fuselage (17),
- le démarrage des moyens de propulsion (23, 24).

17. Procédé de pilotage d'un micro-véhicule selon l'une quelconque des revendications 1 à 15, le long d'une surface inclinée, quelconque, notamment un mur ou un plafond, comprenant une étape de commande de maintien d'une composante de la poussée des moyens de propulsion (23, 24) dirigée vers cette surface.

18. Kit de transformation d'un micro-drone (40) en véhicule à capacité de roulage, ledit micro-drone (40) est de type télé-opéré, à voilure fixe, présentant un plan de symétrie longitudinal vertical XZ, ledit micro-drone (40) comportant des moyens de propulsion (23, 24),
**caractérisé en ce que** le kit comporte des roues dites latérales (25), des moyens d'attacher lesdites roues latérales (25) aux extrémités latérales d'une aile (18) de la voilure fixe du micro-drone (40), l'axe de rotation Y1 des roues latérales (25) étant parallèle à l'axe transversal Y du micro-drone (40),
les roues latérales (25) présentant un diamètre D, adapté à ce que les moyens de propulsion (23, 24) et la voilure fixe du micro-drone (40) ne débordent pas du cylindre déterminé par les roues latérales (25) lorsque celles-ci sont installées sur le micro-drone (40).

## Patentansprüche

1. Mikroflugzeug, umfassend eine Mikrodrohne (40) vom ferngesteuerten Typ mit festen Tragflächen, das eine vertikale Längssymmetrieebene XZ aufweist, wobei die Mikrodrohne (40) Antriebsmittel (23, 24) aufweist,
**dadurch gekennzeichnet, dass** es seitliche Räder (25) aufweist, die an den seitlichen Enden eines Flügels (18) der festen Tragflächen der Mikrodrohne (40) befestigt sind, wobei die Drehachse Y1 der seitlichen Räder (25) parallel zu der Querachse Y der Mikrodrohne (40) ist,
wobei die seitlichen Räder (25) einen derartigen Durchmesser D aufweisen, dass die Antriebsmittel (23, 24) und die festen Tragflächen nicht über den Zylinder hinausragen, der durch die zwei seitlichen Räder (25) bestimmt ist.

2. Mikroflugzeug nach Anspruch 1, **dadurch gekennzeichnet, dass** die Drehachse Y1 der seitlichen Räder (25) entlang der Längsachse X vor dem Schwerpunkt der Mikrodrohne (40) angeordnet ist.

3. Mikroflugzeug nach einem der Ansprüche 1 bis 2, **dadurch gekennzeichnet, dass** der Schwerpunkt der Mikrodrohne (40) entlang der Längsachse X vor dem aerodynamischen Zentrum (32) der Mikrodrohne (40) angeordnet ist.

4. Mikroflugzeug nach einem der Ansprüche 1 bis 3, **dadurch gekennzeichnet, dass** die Drehachse Y1 der seitlichen Räder (25) in der Ausrichtung der Schubachse der Antriebsmittel (23, 24) angeordnet ist, das heißt, dass die zwei Achsen zusammenlaufend sind.

5. Mikroflugzeug nach einem der Ansprüche 1 bis 4, **dadurch gekennzeichnet, dass** die seitlichen Räder (25) von dem Flügel durch einfaches Ziehen an ihrer Nabe (27) abnehmbar sind.

6. Mikroflugzeug nach einem der Ansprüche 1 bis 5, **dadurch gekennzeichnet, dass** die Drehachse Y1 der Räder (25) im vorderen Teil des Flügels (18) in einem Abstand von der benachbarten Vorderkante, der zwischen 5 und 20 % der Breite des Flügels (18) beträgt, angeordnet ist.

7. Mikroflugzeug nach einem der Ansprüche 1 bis 6, **dadurch gekennzeichnet, dass** jedes seitliche Rad (25) durch eine Anordnung von Speichen (26) mit seiner Nabe (27) verbunden ist, wobei diese Speichen (26) eine nach innen gekrümmte Form aufweisen, wobei jedes seitliche Rad (25) in einer Längsebene XZ nahe der Längsachse eines Antriebsmittels (23, 24) angeordnet ist, wobei die Krümmung der Speichen (26) dem Profil des Flügels (18) derart angepasst ist, dass dieses Profil nicht über diese Krümmung der Speichen (26) hinausragt.

8. Mikroflugzeug nach einem der Ansprüche 1 bis 6, **dadurch gekennzeichnet, dass** jedes seitliche Rad (25) durch eine Anordnung von Speichen (26) mit seiner Nabe (27) verbunden ist, wobei die seitlichen Räder (25) im Wesentlichen flach sind, wobei ihre Speichen (26) komplanar sind.

9. Mikroflugzeug nach einem der Ansprüche 1 bis 8, **dadurch gekennzeichnet, dass** der Flügel (18) zwei Elevons (19, 21) aufweist, die auf beiden Seiten der Längsebene XZ der Mikrodrohne (40) angeordnet sind, die am hinteren Teil des Flügels (18) befestigt und um eine gleiche Querachse angelenkt sind.

10. Mikroflugzeug nach Anspruch 9, **dadurch gekennzeichnet, dass** es Mittel aufweist, um die Elevons (19, 21) unabhängig voneinander zu steuern.

11. Mikroflugzeug nach Anspruch 10, **dadurch gekennzeichnet, dass** jedes dieser Elevons (19, 21) in entgegengesetzten Richtungen mit einem Seitenleitwerk, das senkrecht zur Ebene des Flügels (18) ist, derart fest verbunden ist, dass Bewegungen der Elevons (19, 21) Ablenkungen der Seitenleitwerke (20, 22) bewirken.

12. Mikroflugzeug nach Anspruch 11, **dadurch gekennzeichnet, dass** die vertikalen Seitenleitwerke (20, 22) der Mikrodrohne (40) derart dimensioniert sind, dass, wenn sie in Ruhestellung, nicht abgelenkt sind, das Ende (34, 35) von jedem dieser vertikalen Seitenleitwerke (20, 22) leicht und in entgegengesetzter Weise über den Zylinder hinausragt, der durch die Räder (25) bestimmt ist.

13. Mikroflugzeug nach Anspruch 12, **dadurch gekennzeichnet, dass** die Enden (34, 35) in einer Ebene angeordnet sind, die tangential zum Zylinder verläuft, der durch die Räder (25) bestimmt ist.

14. Mikroflugzeug nach einem der Ansprüche 1 bis 13, **dadurch gekennzeichnet, dass** die Antriebsmittel zwei gegenläufige Propeller (23, 24) aufweisen, die an dem vorderen Teil des Flügels (18) entlang der Längsachse X auf beiden Seiten der vertikalen Längssymmetrieebene XZ des Mikroflugzeugs angeordnet sind.

15. Mikroflugzeug nach Anspruch 14, **dadurch gekennzeichnet, dass** es Mittel aufweist, um den Betrieb der Antriebspropeller (23, 24) unabhängig voneinander zu steuern.

16. Verfahren zur Steuerung am Boden eines Mikroflugzeugs nach einem der Ansprüche 12 bis 15, wobei das Verfahren Folgendes aufweist
- einen Befehl einer Ablenkung der Elevons (19, 21), um den Rumpf (17) zu neigen,
- das Starten der Antriebsmittel (23, 24).

17. Verfahren zur Steuerung eines Mikroflugzeugs nach einem der Ansprüche 1 bis 15 entlang einer beliebigen geneigten Fläche, insbesondere einer Mauer oder einer Decke, umfassend einen Schritt des Steuerns des Aufrechterhaltens einer Komponente des Schubs der Antriebsmittel (23, 24), der zu dieser Fläche gerichtet ist.

18. Umbausatz einer Mikrodrohne (40) in einem Fahrzeug mit Rollfähigkeit, wobei die Mikrodrohne (40) vom ferngesteuerten Typ mit festen Tragflächen ist, die eine vertikale Längssymmetrieebene XZ aufweist, wobei die Mikrodrohne (40) Antriebsmittel (23, 24) aufweist,
**dadurch gekennzeichnet, dass** der Umbausatz seitliche Räder (25),
Mittel, zum Befestigen der seitlichen Räder (25) an den seitlichen Enden eines Flügels (18) der festen Tragflächen der Mikrodrohne (40) aufweist,
wobei die Drehachse Y1 der seitlichen Räder (25) parallel zu der Querachse Y der Mikrodrohne (40) ist,
wobei die seitlichen Räder (25) einen Durchmesser D aufweisen, der geeignet ist, dass die Antriebsmittel (23, 24) und die festen Tragflächen der Mikrodrohne (40) nicht über den Zylinder hinausragen, der durch die zwei seitlichen Räder (25) bestimmt ist, wenn diese auf der Mikrodrohne (40) installiert sind.

## Claims

1. Microscale aerial vehicle comprising a remote-controlled fixed-wing microdrone (40), having a longitudinal vertical plane of symmetry XZ, said microdrone (40) comprising propulsion means (23, 24)
**characterized in that** it comprises side wheels (25) attached to the lateral ends of a wing (18) of the fixed wing surface of the microdrone (40), the axis of rotation Y1 of the side wheels (25) being parallel to the transverse axis Y of the microdrone (40),
the side wheels (25) having a diameter D such that the propulsion means (23, 24) and the fixed wing surface do not project beyond the cylinder defined by the two side wheels (25).

2. Microscale vehicle according to Claim 1, **characterized in that** the axis of rotation Y1 of the side wheels (25) is arranged, with respect to the longitudinal axis X, forward of the center of gravity of the microdrone (40).

3. Microscale vehicle according to either of Claims 1 and 2, **characterized in that** the center of gravity of the microdrone (40) is located, with respect to the longitudinal axis X, forward of the aerodynamic center (32) of the microdrone (40).

4. Microscale vehicle according to any one of Claims 1 to 3, **characterized in that** the axis of rotation Y1 of the side wheels (25) is aligned with the axis of thrust of the propulsion means (23, 24), i.e.
the two axes intersect.

5. Microscale vehicle according to any one of Claims 1 to 4, **characterized in that** the side wheels (25) can be removed from the wing simply by pulling on the wheel hubs (27).

6. Microscale vehicle according to any one of Claims 1 to 5, **characterized in that** the axis of rotation Y1 of the wheels (25) is located in the forward portion of the wing (18), at a distance from the nearby leading edge which is between 5 and 20% of the chord of the wing (18).

7. Microscale vehicle according to any one of Claims 1 to 6, **characterized in that** each side wheel (25) is connected to its hub (27) by a collection of spokes (26), wherein these spokes (26) curve inward, each side wheel (25) being located in a longitudinal plane XZ close to the longitudinal axis of a propulsion means (23, 24), the curvature of the spokes (26) matching the profile of the wing (18), such that this profile does not project beyond this curvature of the spokes (26).

8. Microscale vehicle according to any one of Claims 1 to 6, **characterized in that** each side wheel (25) is connected to its hub (27) by a collection of spokes (26), wherein the side wheels (25) are substantially planar, their spokes (26) being coplanar.

9. Microscale vehicle according to any one of Claims 1 to 8, **characterized in that** the wing (18) comprises two elevons (19, 21) located on either side of the longitudinal plane XZ of the microdrone (40), attached to the rear portion of the wing (18) and articulated about one and the same transverse axis.

10. Microscale vehicle according to Claim 9, **characterized in that** it comprises means for controlling the elevons (19, 21) independently from one another.

11. Microscale vehicle according to Claim 10, **characterized in that** each of these elevons (19, 21) is secured to a vertical stabilizer which is perpendicular to the plane of the wing (18), these vertical stabilizers extending in opposite directions, such that movements of the elevons (19, 21) result in deflections of the vertical stabilizers (20, 22).

12. Microscale vehicle according to Claim 11, **characterized in that** the vertical stabilizers (20, 22) of the microdrone (40) are dimensioned such that, when they are in the neutral position, i.e. not deflected, the end (34, 35) of each of these vertical stabilizers (20, 22) projects slightly and in the opposite direction beyond the cylinder defined by the wheels (25).

13. Microscale vehicle according to Claim 12, **characterized in that** these ends (34, 35) are located in a plane which is tangential to the cylinder defined by the wheels (25).

14. Microscale vehicle according to any one of Claims 1 to 13, **characterized in that** the propulsion means comprise two counter-rotating propellers (23, 24) arranged on the forward portion of the wing (18), with respect to the longitudinal axis X, on either side of the longitudinal vertical plane of symmetry XZ of the microscale vehicle.

15. Microscale vehicle according to Claim 14, **characterized in that** it comprises means for controlling the operation of the propellers (23, 24) independently of one another.

16. Method for controlling a microscale vehicle according to any one of Claims 12 to 15 when on the ground, said method comprising:
- deflecting the elevons (19, 21) so as to tilt the fuselage (17),
- starting the propulsion means (23, 24).

17. Method for controlling a microscale vehicle according to any one of Claims 1 to 15 along any inclined surface, in particular a wall or ceiling, comprising a control step of keeping a component of the thrust of the propulsion means (23, 24) oriented toward this surface.

18. Kit for converting a microdrone (40) into a vehicle capable of taxiing, said microdrone (40) being a remote-controlled fixed-wing microdrone having a longitudinal vertical plane of symmetry XZ, said microdrone (40) comprising propulsion means (23, 24)
**characterized in that** the kit comprises what are termed side wheels (25),
means for attaching said side wheels (25) to the lateral ends of a wing (18) of the fixed wing surface of the microdrone (40), the axis of rotation Y1 of the side wheels (25) being parallel to the transverse axis Y of the microdrone (40),
the side wheels (25) having a diameter D such that the propulsion means (23, 24) and the fixed wing surface of the microdrone (40) do not project beyond the cylinder defined by the side wheels (25) when these are installed on the microdrone (40).
